Europäisches Patentamt

European Patent Office

Office européen des brevets

(11) Veröffentlichungsnummer: **0 303 833**
**A2**

## EUROPÄISCHE PATENTANMELDUNG

(21) Anmeldenummer: **88111583.6**

(51) Int. Cl.⁴: **G05B 11/42**

(22) Anmeldetag: **19.07.88**

(30) Priorität: **17.08.87 DE 3727369**

(43) Veröffentlichungstag der Anmeldung:
**22.02.89 Patentblatt 89/08**

(84) Benannte Vertragsstaaten:
**DE FR GB**

(71) Anmelder: **ROBERT BOSCH GMBH**
**Postfach 50**
**D-7000 Stuttgart 1(DE)**

(72) Erfinder: **Cao, Chi-Thuan, Dr.-Ing.**
**Tubizer Strasse 35**
**D-7015 Korntal-Münchingen(DE)**
Erfinder: **Erban, Andreas, Dipl.-Ing.**
**Berliner Strasse 24**
**D-7120 Bietigheim-Bissingen(DE)**

(54) **Regelsystem.**

(57) Es wird ein Regelsystem für Prozesse, die durch ein Verzögerungsglied und ein Totzeitglied approximierbar sind angegeben, wobei aus der Differenz zwischen Sollwert und Regelgröße bei Auftreten von deutlichen Sollwertänderungen eine Umschaltung des Reglerverhaltens erfolgt. Der Regler befindet sich im Normalbetrieb in der Betriebsart Proportional-Integral-Regler, während bei Auftreten einer deutlichen Sollwertänderung die Umschaltung auf Integral-Regelung erfolgt. Das Regelsystem kann auf einfache Weise realisiert werden und ermöglicht eine gute Anpassung an unterschiedliche Betriebszustände des zu regelnden Prozesses auch unter Berücksichtigung auftretender Störungen.

FIG. 1

EP 0 303 833 A2

## Regelsystem

Stand der Technik

Die Erfindung betrifft ein Regelsystem gemäß der Gattung des Hauptanspruchs.

Die Regelung von totzeitbehafteten Prozessen, die allgemein durch ein Verzögerungsglied und durch ein Totzeitglied approximiert werden können, muß mit entsprechend kleiner Reglerverstärkung erfolgen, damit die Stabilität des Regelkreises noch gewährleistet ist. Dies hat zur Folge, daß der Regler zu langsam auf Störungen reagiert und daß für viele Anwendungen die gestellten Anforderungen nicht erfüllt werden können.

Zur Beseitigung dieser bei totzeitbehafteten Prozessen auftretenden Nachteile, wurde der sogenannte Smith-Prädiktor geschaffen, der im ISA-Journal, Seiten 28 bis 33, Ausgabe Februar 1959, Vol. 6, No. 2 beschrieben ist. Das Grundprinzip des Smith-Prädiktors besteht darin, daß im Regelkreis ein dem zu regelnden Prozeß entsprechendes Totzeitglied eingefügt ist, so daß die Totzeit vollständig kompensiert werden kann, sofern die festgelegten Parameter konstant bleiben. Treten jedoch Abweichungen bei den Prozeßparametern, wie Verstärkung, Verzögerungszeit, Totzeit, auf, so reicht bereits eine geringe Abweichung aus, um den Regelkreis instabil werden zu lassen.

Vorteile der Erfindung

Das Regelsystem mit den Merkmalen des Hauptanspruchs hat demgegenüber den Vorteil, daß eine Nachbildung bzw. eine Kenntnis des Totzeitgliedes nicht notwendig ist, wobei eine selbsttätige Anpassung der Regelung bei Normalbetrieb und bei Auftreten einer Störung vorliegt. Insbesondere läßt sich unter Verwendung eines Mikroprozessors eine wesentlich einfachere Prädiktorregelung realisieren, als dies bei analytischen Prädiktoren möglich ist. Das Regelsystem arbeitet im Normalbetrieb als Proportional-Integral-Regeler, der auftretende Störungen schneller ausregeln kann, während bei Auftreten einer Sollwertabweichung eine Integralregelung wirksam ist, wodurch das Übergangsverhalten durch den verhältnismäßig langsamen Integral-Regler kaum beeinflußt wird.

Die bevorzugte Ausführungsform sieht vor, daß der Integral-Regler und der Proportional-Integral-Regler durch einen einzigen, bezüglich seiner Parameter umschaltbaren Proportional-Integral-Regler realisiert sind. Die Umschaltung erfolgt mittels einer Steuerung, der eingangsseitig die den Sollwert darstellende Führungsgröße zugeführt wird. Bei Auftreten einer vorgegebenen Mindestabweichung der Führungsgröße löst die Steuerung eine entsprechende Umschaltung des PI-Reglers auf I-Regelung. Dabei kann vorgesehen sein, daß der I-Regler sein Regelverhalten stets eine gewisse Zeit beibehält, bevor eine erneute Umschaltung erfolgt.

Mittels eines Multiplizierers kann eine fiktive Führungsgröße durch Verknüpfung des Regler-Ausgangssignals und der den Sollwert bildenden Führungsgröße erzeugt werden. Die fiktive Führungsgröße wird in einem Signalformer, der vorzugsweise als Proportional- Differential-Glied ausgebildet ist, in die eigentliche Stellgröße umgewandelt.

Das erfindungsgemäße Regelsystem ist insbesondere als Lambda-Regelung für den Einsatz in Verbindung mit Verbrennungsmotoren vorgesehen. Das Regelsystem ist im Aufbau einfach und erlaubt eine gute Kompensation auftretender Störeinflüsse durch geeignete Umschaltung des Reglerverhaltens.

Zeichnung

Die Erfindung wird nachfolgend anhand der Zeichnungen näher erläutert. Es zeigen:

Figur 1 den prinzipiellen Aufbau des erfindungsgemäßen Regelsystems,

Figur 2 einen durch ein Verzögerungsglied und ein Totzeitglied gebildeten Prozess mit vorgeschalteten Signalformer,

Figur 3 eine Realisierungsmöglichkeit des Signalformers,

Figur 4 ein Ausführungsbeispiel in Form einer Lambda-Regelung und

Figur 5 ein Flußdiagramm der Entscheidungsstrategie zur Umschaltung der Parameter des PI-Reglers.

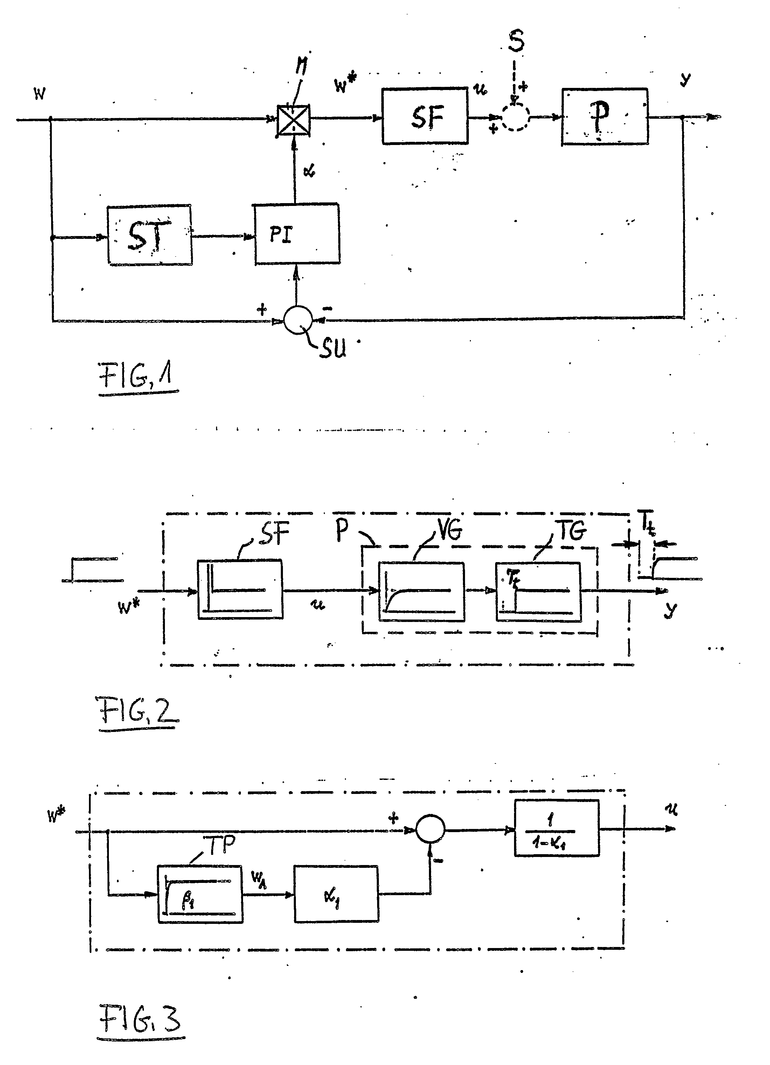

Das in Figur 1 dargestellte Regelsystem enthält einen Multiplizierer M, einen Signalformer SF, eine Steuerung ST, einen Proportional-Integral-Regler PI und einen zu regelnden Prozeß P.

Die dem Regelsystem eingangsseitig zugeführte Führungs größe w stellt den Sollwert dar, woraus sich verknüpft mit dem Faktor $\alpha$ eine fiktive Führungsgröße w* ergibt. Diese gelangt über den Signalformer SF als Stellgröße u an die durch den Prozeß P gebildete Regelstrecke, deren Ausgangssignal die Regelgröße y ist. In einem Subtrahierer SU wird die Differenz zwischen Führungsgröße w und Regelgröße y gebildet und dem PI-Regler PI zugeführt.

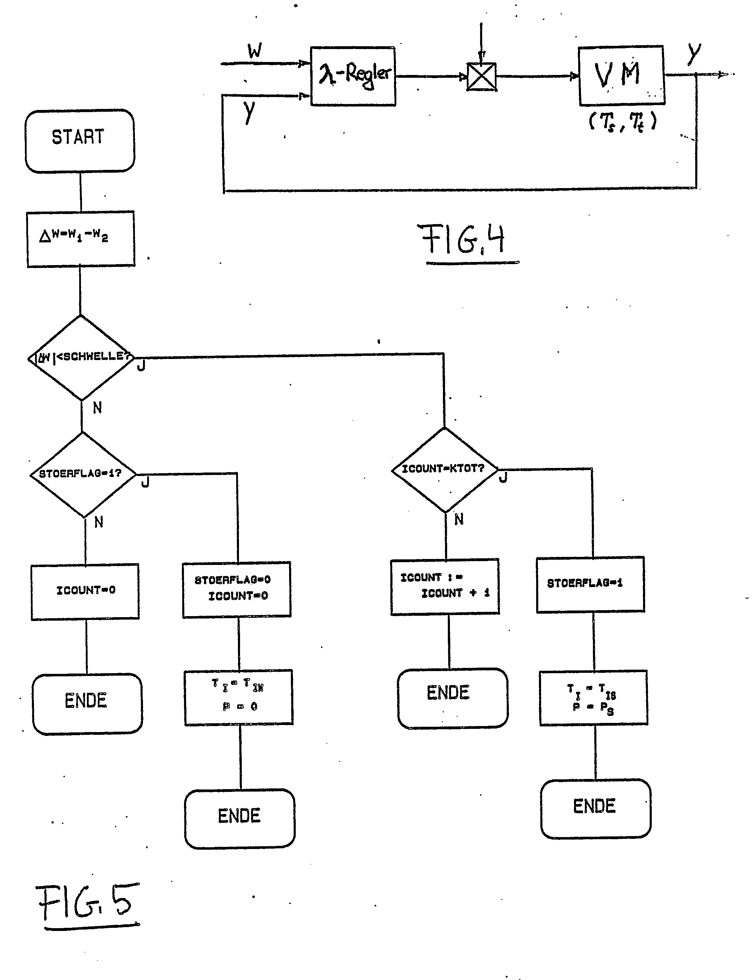

Die durch den Prozeß P gebildete Regelstrecke kann wie in Figur 2 dargestellt als Verzögerungsglied VG und als Totzeitglied TG approximiert werden. Ein dem Signalformer SF zugeführter Signalsprung tritt am Ausgang der Regelstrecke mit einer Zeitverzögerung $T_t$ als Regelgröße y auf. Mit dem Signalformer, der hier als Proportional-Differential-Glied ausgebildet ist, kann im wesentlichen der Einfluß des Verzögerungsgliedes VG ausgeglichen werden.

Für die Funktion des Regelsystems ist die Bildung einer fiktiven Führungsgröße w* aus der aktuellen Führungsgröße w gemäß folgender Gleichung

$$w^* = \alpha \times w \qquad (1)$$

vogesehen, wobei der Faktor $\alpha$ variabel ist. Der äußere Regelkreis mit dem PI-Regler PI, der aufgrund der Regelabweichung w - y ein entsprechendes $\alpha$ liefert ermöglicht eine zustandsabhängige Änderung des Regelverhaltens. Dies geschieht mittels einer Entscheidungsstrategie, die bei unterschiedlichen Betriebssituationen die Parameter des PI-Reglers entsprechend umschaltet. Die Entscheidungsstrategie wird noch anhand von Figur 5 näher erläutert.

Der Signalformer SF ist in Figur 3 detaillierter dargestellt. Er bewirkt, daß ein am Eingang des Signal formers SF auftretender Sprung nach der Totzeit $T_t$ so schnell wie möglich am Ausgang der Strecke wieder erscheint. Für ein Verzögerungsgleid erster Ordnung gilt dabei

$$F(s) = \frac{1}{1 + T_s S} \qquad (2)$$

ist der ideale Signalformer ein PD-Glied entsprechend Figur 2, so gilt:

$$F_{sf}(s) = 1 + T_s S \qquad (3),$$

wobei s der Laplace-Operator der Laplace-Transformation ist.

Das in Figur 3 dargestellte Filter besteht aus einem schnellen Tiefpass TP mit der Zeitkonstanten $\beta_1$, einem Block mit einem Einstellparameter $\alpha_1$ und einem weiteren Block mit der Übertragungsfunktion $1/1 - \alpha_1$. Daraus ergeben sich für die Signale folgende Gleichungen:

$$w_A(k) = \beta_1 \times w_A(k-1) + (1-\beta_1) \, w^*(k-1) \qquad (4)$$

$$u(k) = \frac{1}{(1-\alpha_1)} \times \left[ w^*(k) - \alpha_1 w_A(k) \right] \qquad (5)$$

$$0 < \alpha_1 < 1 \qquad (5a)$$

Das resultierende System hat eine z-Übertragungsfunktion folgender PDT$^1$-Form:

$$\frac{u(z^{-1})}{w^*(z^{-1})} = \frac{1}{(1-\alpha_1)} \left[ \frac{1 - (\beta_1 + \alpha_1(1 - \beta_1))z^{-1}}{1 - \beta_1 z^{-1}} \right] \qquad (6),$$

wobei z der z-Operator der z-Transformation ist. Diese Gleichung entspricht die folgende Darstellung im Zeitbereich:

$$u(k) = \frac{1}{1-\alpha_1} \times w^*(k) + \left\{ - \frac{1}{1-\alpha_1} (\beta_1 + \alpha_1(1 - \beta_1)) \right\} w^*(k-1) + \beta_1 \, u(k-1) \qquad (7).$$

Für den Sonderfall daß $\beta_1 \approx 0$ ist, ergibt sich daraus die Gleichung eines PD-Gliedes wie folgt:

$$u(k) = \frac{1}{1-\alpha_1} \, w^*(k) - \frac{\alpha_1}{1-\alpha_1} \, w^*(k-1) \qquad (8)$$

wobei die Höhe des Differential-Anteils allein durch den Parameter $\alpha_1$ beeinflußt wird.

Eine andere Möglichkeit der Realisierung des idealen PD-Gliedes als Sonderfall eines $PDT_1$-Gliedes ergibt sich aus folgender Gleichung:

$$G_s(s) = \frac{1+ T_z s}{1+ T_n s} = \frac{u(s)}{w^*(s)} \qquad (9)$$

wobei $T_z$ die Vorhaltzeit und $T_n$ die Verzögerungszeit ist. Für die Realisierung mittels eines Mikroprozessors gilt:

$$u(k) = \frac{T_z}{T_n} \, w^*(k) + \left( \frac{T_A}{T_n} - \frac{T_z}{T_n} \right) w^*(k-1) + \left( 1 - \frac{T_A}{T_n} \right) u(k-1) \qquad (10)$$

wobei TA die Abtastzeit ist.

Werden die Parameter

$$\frac{T_z}{T_n} \gg 1 \qquad \text{und} \qquad \frac{T_A}{T_n} = \frac{1}{2} \qquad (11)$$

gewählt, so erhält man angenähert ein ideales PD-Glied.

Die Bildung der fiktiven Führungsgröße w * , die dem Signalformer SF zugeführt wird, wäre dann nicht erforderlich, wenn es sich um einen idealen Prozeß ohne Störung S und bei genauer Kenntnis der Streckenverstärkung handeln würde. Da in jedem realen Prozeß Störungen und Parameterabweichungen vorhanden sind, müssen diese Einflüsse berücksichtigt werden. Über den Parameter α, der durch einen äußeren Regelkreis, bestehend aus Subtrahierer SU, Steuerung ST und Proportional-Integral-Regler PI besteht, bestimmt wird, können durch Bildung der fiktiven Führungsgröße w* diese störenden Einflüsse beseitigt werden, ohne dabei die Dynamik des Führungsverhaltens zu verschlechtern. Im Regelsystem wird somit eine korrigierte Führungsgröße zugeführt, die das gewünschte dynamische Verhalten bezüglich Führung unter Berücksichtigung auftretender Störungen S gewährleistet.

Für den äußeren Regelkreis hat sich der Proportional-Integral-Regler als zweckmäßig erwiesen. Der Integral-Anteil ist verantwortlich für die stationäre Genauigkeit während der Proportional-Anteil die Dynamik übernimmt. Aufgrund der Regeldifferenz w - y wird ein entsprechendes α gebildet, um einerseits Störungen S, andererseits Abweichungen der Streckenverstärkung auszuregeln. Treten keine Störungen S und keine Abweichungen der Streckenverstärkung auf, so ist α = 1.

Die Steuerung (Figur 1) veranlaßt in Abhängigkeit von deren eingangsseitiger Führungsgröße w eine Einstellung der Parameter des PI-Reglers. Im Wege einer Entscheidungsstrategie, die im Flußdiagramm von Figur 5 näher dargestellt ist, werden die Parameter des äußeren Regelkreises umgeschaltet, je nach dem ob eine Änderung der Führungsgröße vorliegt oder nicht. Der äußere Regelkreis ist im Normalfall für Störverhalten ausgelegt, so daß auftretende Störungen schnell ausgeregelt werden können. Sobald Änderungen der Führungsgröße w auftreten, die mit Hilfe des Entscheidungskriteriums festgestellt werden, erfolgt die Umschaltung auf integrierendes Verhalten (I-Regler). Diese Umschaltung kann dann eine vorgegebene Zeitspanne beibehalten werden, bevor wieder auf proportionales Verhalten (PI-Regelung) umgeschaltet wird.

Figur 4 veranschaulicht das Beispiel einer Lambda-Regelung für einen Verbrennungsmotor VM dessen Regelstrecke mit der Verzögerungszeit $T_s$ und mit der Totzeit $T_t$ behaftet ist. Dabei läßt sich das Verzögerungsverhalten durch die zeitliche Änderung der Gemischzusammensetzung in den einzelnen Zylindern erklären. Die Totzeit entsteht durch den Transport des Abgases von den Auslaßventilen bis zu Einbauort der Lambdasonde. Beide Parameter $T_s$ und $T_t$ hängen im wesentlichen von der Motordrehzahl ab und sind somit starken Änderungen unterworfen. Mit dem oben erläuterten Regelsystem lassen sich die durch die Änderungen der Parameter auftretenden Probleme lösen.

Es wird nun nachfolgend anhand des in Figur 5 angegebenen Flußdiagramms die Entscheidungsstrategie zur Umschaltung der Regelparameter erläutert.

Der äußere Regler hat PI-Struktur und ist im Normalfall für Störverhalten ausgelegt. Die beiden Parameter Verstärkung und Nachstellzeit werden so gewählt, daß Störungen so schnell wie möglich ausgeregelt werden können.

Die bisher noch nicht erläuterten Bezeichnungen, die im Flußdiagramm eingetragen sind, haben folgende Bedeutung:

$T_I$ und P sind Parameter des äußeren PI-Reglers;
KTOT ist die Wartezeit;
ICOUNT bezeichnet einen Warteschleifenzähler;
Störflag = 0 bedeutet, daß der Regler die Betriebart I-Regler hat;
Störflag = 1 bedeutet, daß der Regler die Betriebsart PI-Regler hat;
$T_{IW}$ ist die Zeitkonstante des Integrierers für Führungsverhalten (Zeitkonstante klein) und
$T_{IS}$ ist die Zeitkonstante des Integrierers für den Störfall (Zeitkonstante groß);
$P_S$ ist der Parameter für den Proportionalanteil im Störfall (im Führungsfall ist dieser Parameter = 0)
Sobald die Änderung der Führungsgröße w eine bestimmte Schwelle überschreitet, erfolgt sofort die Umschaltung des äußeren Reglers auf I-Struktur (Störflag = 0) und die Nachstellzeit des Integrierers wird auf den Wert $T_I = T_{IW}$ erhöht. Gleichzeitig wird der Warteschleifenzähler ICOUNT auf Null gesetzt. Wenn der äußere Regler schon I-Struktur hatte (Sörflag = 0), wird nur der Warteschleifenzähler zurückgesetzt.

Bleibt während der Wartezeit KTOT die Änderung der Führungsgröße w unterhalb der Schwelle, so erfolgt die Umschaltung des äußeren Reglers auf PI-Struktur (Störflag = 1). Die Nachstellzeit wird reduziert auf $T_I = T_{IS}$, die Proportionalverstärkung wird auf den Wert $P = P_S$ eingestellt. Die Auslegung der Wartezeit KTOT kann entsprechend der Einschwingzeit des Regelkreises gewählt werden.

**Ansprüche**

1. Regelsystem für Prozesse, die durch ein Verzögerungsglied und ein Totzeitglied approximierbar sind, bei dem aus der dem Sollwert entsprechenden Führungsgröße und aus der Regelgröße mittels einer Regelanordnung ein den Prozeß steuernde Stellgröße abgeleitet wird, dadurch gekennzeichnet, daß die Differenz zwischen Sollwert (w) und Regelgröße (y) über einen Proportional-Integral-Regler und bei Auftreten einer Sollwertänderung (Δ w) über einen Integral-Regler einem Multiplizierer (M) zugeführt wird, an dessen anderem Eingang der Sollwert (w) anliegt und der ausgangsseitig eine fiktive Führungsgröße (w*) an einen Signalformer (SF) zur Erzeugung der Stellgröße (u) abgibt.

2. Regelsystem nach Anspruch 1, dadurch gekennzeichnet, daß der Integral-Regler und der Proportional-Integral-Regler durch einen einzigen, bezüglich seiner Parameter umschaltbaren PI-Regler realisiert sind.

3. Regelsystem nach einem der Ansprüche 1 oder 2, dadurch gekennzeichnet, daß die Umschaltung von PI-Regelung auf I-Regelung erst bei Überschreiten einer vorgegebenen Mindest-Sollwertabweichung (Δ w) erfolgt, und daß nach einer Wartezeit wieder auf die PI-Regelung zurückgeschaltet wird.

4. Regelsystem nach einem der vorhergehenden Ansprüche, dadurch gekennzeichnet, daß der Signalformer (SF) ein Proportional-Differential-Glied ist.

5. Regelsystem nach einem der vorhergehenden Ansprüche, dadurch gekennzeichnet, daß der Signalformer (SF) einen Tiefpass (TP) und Funktionsblöcke mit einstellbaren Parametern ($\alpha_1$) umfaßt und der Gleichung

$$u(k) = \frac{1}{(1-\alpha_1)} \times \left[ w^*(k) - \alpha_1 w_A(k) \right]$$

genügt, wobei

u(k) die Stellgröße zum Zeitpunkt

w*(k) die dem Signalumformer zugeführte Führungsgröße

$w_A(k)$ die Ausgangsgröße des Tiefpasses ist und

$\alpha_1$ im Bereich zwischen 0 und 1 einstellbar ist.

6. Regelsystem nach einem der vorhergehenden Ansprüche, dadurch gekennzeichnet, daß das Regelsystem als Lambda-Regelung für einen Verbrennungsmotor (VM) verwendet wird.

FIG.1

FIG.2

FIG.3

21362

START

$\Delta W = W_1 - W_2$

$|\Delta W| < \text{SCHWELLE?}$ — J / N

STOERFLAG=1? — J / N

ICOUNT=KTOT? — J / N

ICOUNT=0

STOERFLAG=0
ICOUNT=0

ICOUNT :=
ICOUNT + 1

STOERFLAG=1

ENDE

$T_I = T_{IK}$
$P = 0$

ENDE

$T_I = T_{IS}$
$P = P_S$

ENDE

ENDE

## FIG.4

W → λ-Regler → ⊠ → V M → Y

$(T_s, T_t)$

y

## FIG.5